# DEMANDE DE BREVET EUROPEEN

(11) **EP 2 197 089 A2**
(43) Date de publication de la demande: **16.06.2010**
(21) Numéro de dépôt: 09174207.2
(22) Date de dépôt: 27.10.2009
(51) Int. Cl.: H02K 3/50, H02K 15/085, H02K 11/04

(54) **Stator de machine électrique tournante, notamment d'un alternateur**

(30) Priorité: 10.12.2008 FR 0858438
(71) Demandeur: Valeo Equipements Electriques Moteur, 94046 Créteil Cedex (FR)
(72) Inventeur: Ramet, Vincent, 62630, ETAPLES (FR); Guillard, Romaric, 91120, PALAISEAU (FR); Defebvin, Alain, 62630, CORMONT (FR)
(74) Mandataire: de Lambilly Delorme, Marie Pierre

(57) **Abrégé**

L'invention concerne un stator de machine électrique tournante polyphasée, notamment un alternateur, comportant :
- un corps de stator,
- un bobinage (18) définissant une pluralité de phases électriques, le bobinage comprenant une pluralité d'entrées et sorties de phase, chaque entrée de phase étant connectée électriquement à une sortie de phase associée, l'une au moins des entrées de phase étant directement connectée à la sortie de phase associée, notamment par soudure, et au moins une autre des entrées de phase étant connectée à la sortie de phase associée par l'intermédiaire d'un connecteur électrique.

## Description

L'invention concerne notamment un stator de machine électrique tournante, notamment d'un alternateur.

On connaît par la demande internationale WO 2005/091474 (voir notamment les figures 1A et 2A) un stator de machine électrique tournante polyphasée comportant un bobinage ondulé formant, de part et d'autre d'un corps de stator, des chignons de bobinage. La fabrication du bobinage comprend une étape d'insertion phase par phase des fils de bobinage dans des encoches du corps de stator, puis une étape de mise en forme des chignons par compactage des fils des chignons afin d'obtenir des chignons de forme et dimensions souhaitées. Lors de l'étape d'insertion phase par phase des fils, toutes les spires d'une phase sont insérées dans les encoches appropriées avant d'insérer les spires de la phase suivante.

On connaît par ailleurs par la demande internationale WO 2008/055752 un alternateur comprenant un enroulement de stator à cinq phases.

L'invention vise notamment à proposer un nouveau stator de machine électrique tournante, en particulier avec un bobinage présentant des paires entrée - sortie de phase qui sont suffisamment espacées les unes des autres pour permettre des opérations telles le dénudage ou la soudure de fils électriques.

L'invention a ainsi pour objet, selon l'un de ses aspects, un stator de machine électrique tournante polyphasée, notamment un alternateur, comportant :
- un corps de stator pourvu d'encoches pour recevoir une pluralité de fils conducteurs du bobinage du stator,
- un bobinage définissant une pluralité de phases électriques, le bobinage comprenant une pluralité d'entrées et sorties de phase, chaque entrée de phase étant connectée électriquement à une sortie de phase associée, l'une au moins des entrées de phase étant directement connectée à la sortie de phase associée, notamment par soudure, et au moins une autre des entrées de phase étant connectée à la sortie de phase associée par l'intermédiaire d'un connecteur électrique.

Grâce à l'invention, il est possible de s'affranchir de la proximité d'une entrée et d'une sortie de phase à connecter pour fermer le circuit. Cette proximité, notamment pour un besoin de procédé de fabrication, peut être obligatoire, et le développement du schéma de bobinage peut être plus simple.

L'invention peut en outre permettre d'éviter le chevauchement d'un fil du bobinage le long d'un chignon.

Ceci permet de faciliter le procédé de fabrication car le maintien des fils peut être relativement compliqué.

Dans un exemple de mise en oeuvre de l'invention, le nombre de phases électriques du bobinage de stator est au moins égal à deux ou trois, étant notamment égal à cinq.

De préférence, le stator comporte un corps de stator pourvu d'encoches pour recevoir une pluralité de fils conducteurs du bobinage de stator, et les entrées et sorties de phase du bobinage de stator sont formées sur des brins de fils conducteurs provenant d'encoches qui sont régulièrement espacées les unes des autres, par exemple d'un angle de 72° lorsque le bobinage de stator est de type pentaphasé.

Avantageusement le bobinage de stator est formé phase par phase.

De préférence, le bobinage de stator comporte au moins deux phases bobinées dans des sens opposés.

Dans un exemple de mise en oeuvre de l'invention, le bobinage de stator est de type pentaphasé avec cinq paires d'entrée et sortie de phase, et, pour quatre paires d'entrée et sortie de phase, l'entrée et la sortie de phase associée sont reliées directement, notamment par soudure, et pour une paire, l'entrée et la sortie associée sont reliée via le connecteur électrique.

Le cas échéant, le connecteur électrique comporte au moins une piste conductrice surmoulée dans une matière plastique.

L'invention a également pour objet une machine électrique tournante, notamment alternateur pour véhicule automobile, comportant un stator tel que défini ci-dessus.

L'invention a encore pour objet un connecteur pour une machine électrique tournante notamment du type précité, caractérisé par le fait qu'il comporte deux pistes conductrices isolées électriquement l'une de l'autre, notamment surmoulées dans une matière plastique, chaque piste conductrice étant reliée à des pattes de connexion pour la connexion avec des entrées et sorties de phase d'un bobinage de stator de la machine.

L'invention concerne encore un procédé de fabrication d'un stator de machine électrique tournante, notamment d'un alternateur, le stator comprenant un corps de stator présentant un axe longitudinal, le stator comprenant en outre un bobinage comportant une pluralité de phases, le procédé comportant les étapes suivantes :
- bobiner une première phase du bobinage en formant des spires suivant un premier sens circonférentiel du corps de stator,
- bobiner une autre phase du bobinage en formant des spires suivant un deuxième sens circonférentiel opposé au premier.

Le bobinage comporte avantageusement au moins une entrée et une sortie de phase, et l'une au moins de ces entrée et sortie est de préférence connectée à un pont de diode de la machine électrique tournante.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe longitudinale, un alternateur conforme à un exemple de mise en oeuvre de l'invention,
- la figure 2 est un schéma électrique du bobinage de stator, conforme à un exemple de mis en oeuvre de l'invention, de la machine de la figure 1,
- les figures 3 et 4 sont des schémas de bobinage de stator selon deux exemples de mise en oeuvre de l'invention, et
- la figure 5 représente, schématiquement et partiellement, un connecteur selon un exemple de mise en oeuvre de l'invention.

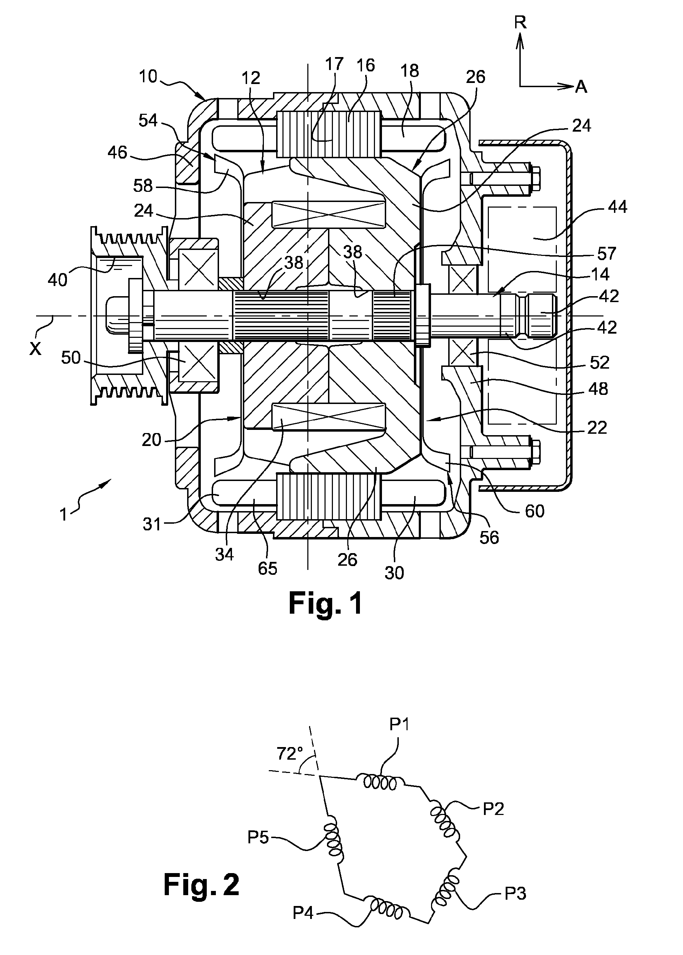

Dans la suite de la description, les flèches "A" et "R" de la figure 1 indiquent respectivement des directions axiale et radiale.

On a représenté sur la figure 1 une machine électrique tournante polyphasée 1 formant, dans le présent exemple de mise en oeuvre de l'invention, un alternateur pour véhicule automobile.

Bien entendu, la machine électrique 1 peut, si on le souhaite, être réversible et former un alterno-démarreur pouvant fonctionner en mode moteur électrique pour démarrer le moteur à combustion du véhicule et en mode alternateur pour produire de l'énergie électrique.

Cette machine 1 comporte un carter 10 et, à l'intérieur de celui-ci, un rotor 12 solidaire en rotation d'un arbre rotatif 14 d'axe X, appelé arbre de rotor, et un stator 16 qui entoure le rotor 12.

Le stator 16 comporte un corps 17 formé d'un paquet de tôles doté d'encoches pour le montage d'un bobinage de stator 18 formant des chignons 30 et 31 de part et d'autre du corps de stator 17.

Le rotor 12 comprend deux roues polaires 20 et 22, pourvues chacune d'un flasque transversal 24 sur la périphérie duquel se raccordent une pluralité de griffes 26 s'étendant sensiblement suivant la direction axiale A.

Les griffes 26 d'une roue polaire forment avec les griffes 26 de l'autre roue polaire des espaces interpolaires agencés pour recevoir chacun une structure à aimant, non représentée.

Un bobinage d'excitation 34 est mis en place entre les flasques 24 des roues polaires 20 et 22.

Chaque roue polaire 20 ; 22 comporte un alésage formant un passage intérieur 38 pour recevoir l'arbre 14.

Les roues polaires 20 et 22 sont réalisées par exemple en acier.

L'arbre 14 porte à son extrémité avant une poulie 40 appartenant à un dispositif de transmission de mouvement par l'intermédiaire d'au moins une courroie (non représentée) entre l'alternateur 1 et le moteur à combustion du véhicule automobile, et à son extrémité arrière des bagues collectrices 42 reliées par des liaisons filaires (non représentées) au bobinage d'excitation 34 du rotor 12.

Des balais d'un porte-balais 44 représenté de manière très schématique sont disposés de façon à frotter sur les bagues collectrices 42, afin d'alimenter le bobinage 34 en courant électrique.

Lorsque l'arbre 14 est en rotation et le bobinage d'excitation 34 activé par une alimentation électrique, le rotor inducteur 12 crée un courant induit alternatif dans le stator 16.

Le carter 10 comporte, dans l'exemple considéré, deux parties, à savoir un palier avant 46 et un palier arrière 48 portant le porte-balais 44.

Les paliers 46 et 48 portent chacun un roulement à billes respectivement 50 et 52 pour le montage à rotation de l'arbre 14.

L'alternateur 1 comporte également des moyens pour son refroidissement.

Par exemple, comme illustré à la figure 1, les paliers 46 et 48 sont ajourés pour permettre le refroidissement de l'alternateur par circulation d'air.

Le rotor 12 porte, dans l'exemple décrit, au moins à l'une de ses extrémités axiales un ventilateur destiné à assurer une circulation de l'air. Un premier élément de ventilation 54 est par exemple prévu sur la face transversale avant du rotor 12 et un deuxième élément de ventilation 56 est prévu sur la face arrière du rotor 12. Chaque élément de ventilation 54 et 56 est pourvu d'une pluralité de pales 58 et 60.

On va maintenant décrire en référence aux figures 2 à 4, plus en détail, le stator 16.

Dans l'exemple décrit, le bobinage 18 du stator 16 est de type pentaphasé, à savoir formant cinq phases électriques.

Le bobinage 18 comporte, suivant la direction R, une pluralité de couches de fils 65 dans chacune des encoches du corps de stator, ces encoches étant au nombre de 60 dans l'exemple décrit.

Comme illustré sur la figure 2, les phases électriques P1, P2, P3, P4 et P5 du bobinage 18 définissent entre eux un décalage électrique de 72°.

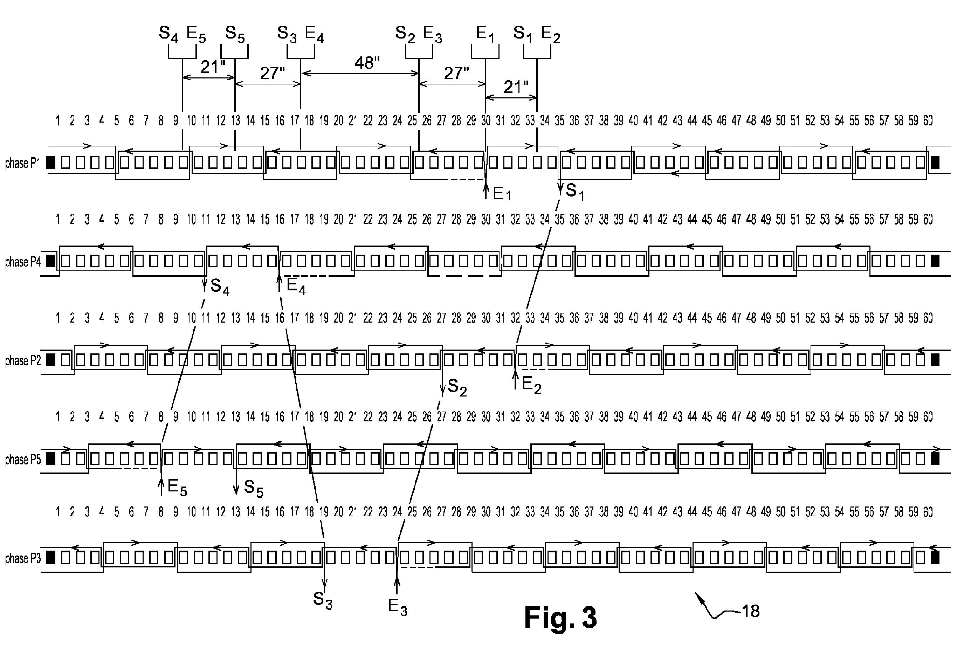

Dans l'exemple de la figure 3, les cinq phases sont formées de la manière suivante.

Afin d'avoir un système électriquement équilibré, il est prévu un décalage électrique de 72° entre phases successives (voir figure 2).

Etant donné que cinq encoches correspondent à 180° électriques, deux phases successives sont décalées de deux encoches.

Ceci est visible sur la figure 3, pour les phases P1, P2, P3, P4 et P5.

Pour le dénudage des fils, il est nécessaire d'imposer un angle mécanique minimum entre les entrées E et sorties S.

Pour connecter les entrées E et sorties S, il est également nécessaire d'avoir un angle mécanique maximum.

L'angle mécanique entre les différentes entrées E et sorties S est compris entre les minimum et maximum mentionnés juste ci-dessus.

Afin d'améliorer la position des différentes phases, il est possible de décaler les phases d'un angle de 2k*Pi degrés électriques par rapport à sa position initiale, k étant un nombre entier. Ceci est le cas pour les phases P3, P4 et P5 (voir figure 3).

Le bobinage 18 illustré sur la figure 3 est de type ondulé réparti, obtenu en bobinant les fils avec un changement de sens.

En fin de formation du bobinage 18, la sortie S4 de la phase P4 est reliée à l'entrée E5 de phase P5, la sortie S3 de la phase P3 est reliée à l'entrée E4 de phase P4, la sortie S2 de la phase P2 est reliée à l'entrée E3 de phase P3, et la sortie S1 de la phase P1 est reliée à l'entrée E2 de phase P2.

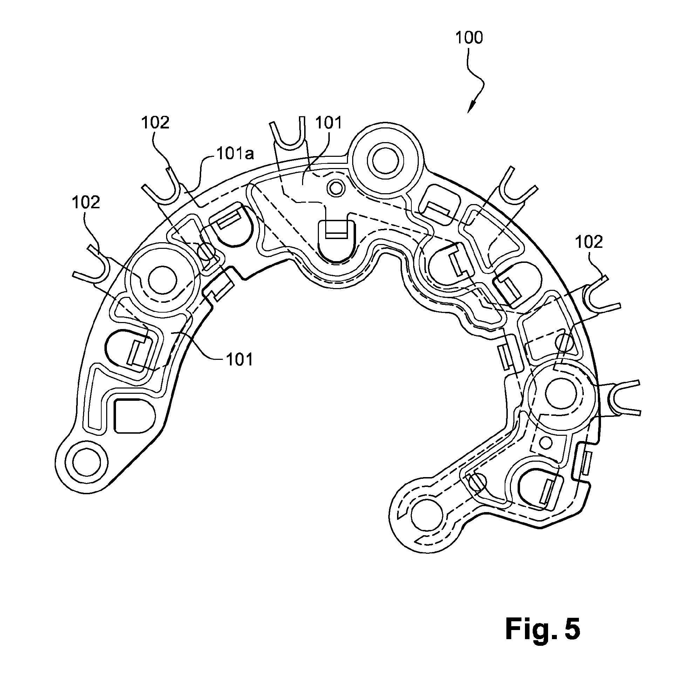

Les sorties S5 de la phase P5 et l'entrée E1 de la phase P1 sont reliées grâce à une trace 101 a dans un connecteur électrique 100 (voir figure 5).

Cette trace ou piste 101 a et les autres traces ou pistes 101 sont surmoulées dans une matière plastique du connecteur 100.

Dans l'exemple décrit à la figure 3, il se forme les décalages mécaniques suivants :
- entre S4E5 et S5 : 21 °
- entre S5 et S3E4 : 27°
- entre S3E4 et S2E3 : 48°
- entre S2E3 et E1 : 27°
- entre E1 et S1E2 : 21°

Les entrées E et sorties S, une fois connectées entre elles, sont reliées via des cochets de soudure 102 au connecteur électrique 100.

Ce connecteur électrique 100 permet de relier les phases au pont redresseur de la machine.

On peut se référer par exemple à la demande de brevet FR 2 754 650 pour la description plus détaillée d'un tel connecteur.

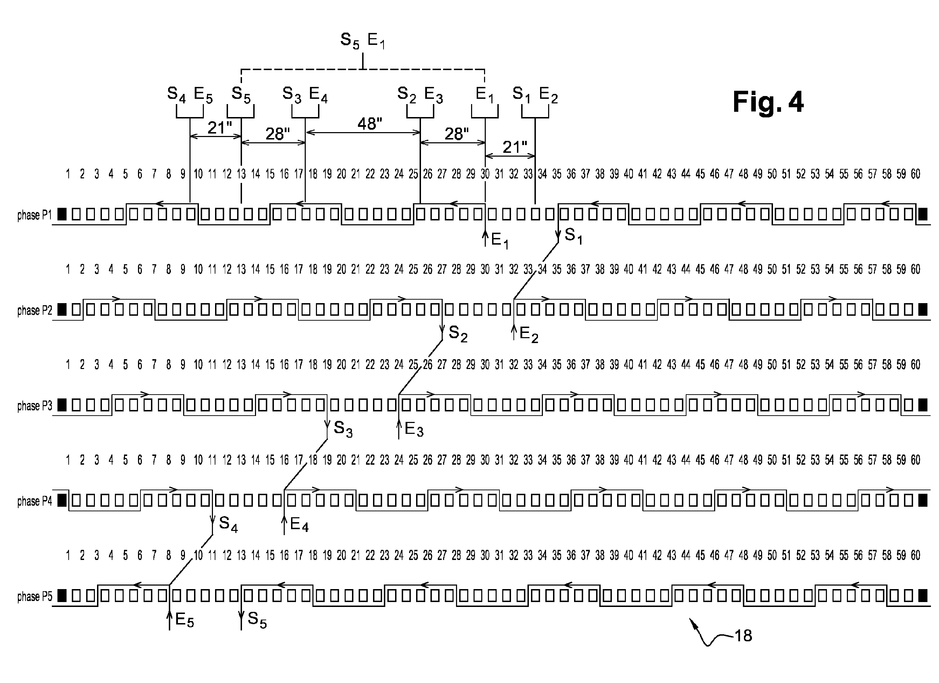

Dans l'exemple de la figure 4, les cinq phases sont formées de manière analogue à l'exemple décrit à la figure 3, avec la différence que le bobinage de la figure 4 est obtenu en bobinant les fils toujours dans la même direction.

En fin de formation du bobinage 18, la sortie S4 de la phase P4 est reliée à l'entrée E5 de phase P5, la sortie S3 de la phase P3 est reliée à l'entrée E4 de phase P4, la sortie S2 de la phase P2 est reliée à l'entrée E3 de phase P3, et la sortie S1 de la phase P1 est reliée à l'entrée E2 de phase P2.

Les sorties S5 de la phase P5 et l'entrée E1 de la phase P1 sont reliées à une trace 101 a dans le connecteur 100.

Dans l'exemple décrit à la figure 3, il se forme les décalages mécaniques suivants :
- entre S4E5 et S5 : 21 °
- entre S5 et S3E4 : 28°
- entre S3E4 et S2E3 : 48°
- entre S2E3 et E1 : 28°
- entre E1 et S1 E2 : 21 °.

## Revendications

1. Stator (16) de machine électrique tournante polyphasée (1), notamment un alternateur, comportant :
- un corps de stator (17) pourvu d'encoches pour recevoir une pluralité de fils conducteurs du bobinage de stator,
- un bobinage (18) définissant une pluralité de phases électriques, le bobinage comprenant une pluralité d'entrées et sorties de phase, chaque entrée de phase étant connectée électriquement à une sortie de phase associée, l'une au moins des entrées de phase étant directement connectée à la sortie de phase associée, notamment par soudure, et au moins une autre des entrées de phase étant connectée à la sortie de phase associée par l'intermédiaire d'un connecteur électrique (100) et les entrées et sorties de phase du bobinage de stator sont formées sur des brins de fils conducteurs provenant d'encoches qui sont régulièrement espacées les unes des autres, d'un angle électrique de 72° lorsque le bobinage de stator est de type pentaphasé.

2. Stator selon la revendication précédente, **caractérisé par le fait que** le nombre de phases électriques du bobinage de stator est au moins égal à deux.

3. Stator selon l'une quelconque des revendications précédentes, **caractérisé par le fait que** le bobinage de stator est formé phase par phase.

4. Stator selon l'une quelconque des revendications précédentes, **caractérisé par le fait que** le bobinage (18) de stator comporte au moins deux phases bobinées dans des sens opposés.

5. Stator selon l'une quelconque des revendications précédentes, le bobinage de stator étant de type pentaphasé avec cinq paires d'entrée (E) et sortie (S) de phase, **caractérisé par le fait que**, pour quatre paires d'entrée et sortie de phase, l'entrée et la sortie de phase associée sont reliées directement, notamment par soudure, et pour une paire, l'entrée et la sortie associée sont reliée via le connecteur électrique.

6. Stator selon l'une quelconque des revendications précédentes, **caractérisé par le fait que** le connecteur électrique (100) comporte au moins une piste conductrice (101 ; 101 a) surmoulée dans une matière plastique.

7. Machine électrique tournante (1), notamment alternateur pour véhicule automobile, comportant un stator (16) tel que défini dans l'une quelconque des revendications précédentes.

8. Connecteur (100) pour une machine électrique tournante notamment selon la revendication précédente, **caractérisé par le fait qu'**il comporte au moins deux pistes conductrices (101 ; 101 a) isolées électriquement l'une de l'autre, notamment surmoulées dans une matière plastique, chaque piste conductrice étant reliée à des pattes de connexion pour la connexion avec des entrées et sorties de phase d'un bobinage de stator de la machine.

9. Procédé de fabrication d'un stator de machine électrique tournante, notamment d'un alternateur, le stator comprenant un corps de stator présentant un axe longitudinal, le stator comprenant en outre un bobinage pentaphasé selon une des revendications précédentes, le procédé comportant les étapes suivantes :
- bobiner une première phase du bobinage en formant des spires suivant un premier sens circonférentiel du corps de stator,
- bobiner une autre phase du bobinage en formant des spires suivant un deuxième sens circonférentiel opposé au premier.

10. Procédé selon la revendication précédente, **caractérisé par le fait que** le bobinage comporte au moins une entrée et une sortie de phase, et l'une au moins de ces entrée et sortie est connectée à un pont de diode de la machine électrique tournante.
